# EUROPEAN PATENT APPLICATION

(11) **EP 3 858 468 A1**
(43) Date of publication of application: **04.08.2021**
(21) Application number: 20155145.4
(22) Date of filing: 03.02.2020
(51) Int. Cl.: B01D 53/62, B01D 53/92, B01D 53/78

(54) **PROCESS AND ABSORPTION UNIT FOR REMOVAL OF CO2 FROM VEHICLE EXHAUST GAS**

(71) Applicant: BASF SE, 67056 Ludwigshafen am Rhein (DE)
(72) Inventor: WÜNSCH, Josef Richard, 67056 Ludwigshafen (DE); GEYER, Florian Ludwig, 67056 Ludwigshafen (DE); SCHERR, Günter, 67056 Ludwigshafen (DE)
(74) Representative: Hörschler, Wolfram Johannes

(57) **Abstract**

A process for removal of carbon dioxide (CO₂) from a vehicle exhaust gas is proposed wherein, within a vehicle, a vehicle exhaust gas is pretreated in order to remove nitrogen oxides (NOx), carbon monoxide (CO), carbon hydrates and/or particles and, after pretreatment, CO₂ is at least partially absorbed from the exhaust gas by passing at least a portion of the exhaust gas through an absorption unit (10). The absorption unit (10) comprises a liquid absorption medium (11) which comprises at least one absorption component capable of absorbing CO2 by chemisorption or chemical reaction which is dissolved, dispersed or suspended in a carrier medium.

A further aspect of the invention relates to an absorption unit for removal of CO₂ from a vehicle exhaust gas which is configured to carry out the proposed process.

## Description

The invention relates to a process for removal of carbon dioxide (CO₂) from a vehicle exhaust gas wherein, within a vehicle, a vehicle exhaust gas is pretreated in order to remove nitrogen oxides (NOx), carbon monoxide (CO), carbon hydrates and/or particles and, after pretreatment, CO₂ is at least partially absorbed from the exhaust gas. A further aspect of the invention relates to an absorption unit for removal of CO₂ from a vehicle exhaust gas which is configured to carry out the proposed process.

Greenhouse gases such as CO₂ are emitted by vehicles comprising internal combustion engines. In order to limit the effects of global warming it is desirable to reduce the amount of CO₂ emitted by vehicles. In an effort to reduce CO₂ emissions from passenger cars, EU legislation sets mandatory emission reduction targets for new cars. From 2021, the EU fleet-wide average emission target for new cars will be 95 g CO₂ per km. This emission level corresponds to a fuel consumption of around 4.1 l/100 km of petrol or 3.6 l/100 km of diesel. One possibility to lower CO₂ emissions of a given vehicle is thus increasing the fuel efficiency. However, due to increased demand for larger cars, especially so called sports utility vehicles (SUVs), manufacturers find it difficult to reach the set average emission target.

CO₂ emissions may also be lowered by making use of alternative drive concepts such as electric vehicles. Such an electric vehicle may, for example, be powered by batteries or a hydrogen fuel cell. These alternative drive concepts, however, are facing difficulties either due to limited range or lack of availability of alternative fuels such as liquid hydrogen.

Thus, it would be desirable to lower the CO₂ emission of a vehicle having an internal combustion engine by removing CO₂ from the exhaust gas.

Document US 2019/0388830 A1 discloses a CO₂ separation system for installation in a vehicle using an internal combustion engine. The system comprises a CO₂ separation device having a CO₂ permeable membrane. CO₂ gas selectively permeates through the membrane due to a difference in CO₂ partial pressure between a CO₂ supply side and a CO₂ permeation side of the CO₂ separation device as a driving force. Separated CO₂ gas is stored in a storage device. Further, the CO₂ separated by the CO₂ separation system may be decomposed using, for example, a plasma and discharged as C and O₂.

Separation of CO₂ gas from a vehicle exhaust gas, storing of the gas, for example in a pressurized storage vessel and decomposition of CO₂ into C and O₂ are all energy intensive processes of which at least the separation step and the storage must be performed on board of the vehicle. Thus, the efficiency of the vehicle is reduced which results in increased fuel consumption.

There is a need for an energy efficient process for removing CO₂ from vehicle exhaust gas.

A process for removal of carbon dioxide (CO₂) from a vehicle exhaust gas is proposed, wherein, within a vehicle, a vehicle exhaust gas is pretreated in order to remove nitrogen oxides (NOₓ), carbon monoxide (CO), carbon hydrates and/or particles and, after pretreatment, CO₂ is at least partially absorbed from the exhaust gas by passing at least a portion of the exhaust gas through an absorption unit. The absorption unit comprises a liquid absorption medium which comprises at least one absorption component capable of absorbing CO₂ by chemisorption or chemical reaction which is dissolved, dispersed or suspended in a carrier medium.

The vehicle is, for example, a personal car or a commercially used vehicle such as a truck or a bus. However, the invention may also be applied to process the exhaust gas of aircrafts and ships. The engine of the vehicle is an internal combustion engine which consumes fuel and produces an exhaust gas which is at least partially processed in the absorption unit in order to absorb at least a part of the carbon dioxide present in the exhaust gas.

The proposed process does not require prior separation from the exhaust gas or enrichment of CO₂ prior to absorption.

In a first step, the exhaust gas, which is preferably the exhaust gas of an internal combustion engine such as a petrol engine or a diesel engine, is pretreated. The burned fuel may, for example, be a fossil fuel, such as petrol, diesel or natural gas. Alternatively, synthetic fuels or mixtures of fossil fuels and synthetic fuels may be used. Pretreatment of the exhaust gas may comprise a catalytic exhaust gas treatment and/or the use of a particle filter. Catalytic exhaust gas treatment may include the use of selective catalytic reduction (SCR) for converting nitrogen oxides (NOₓ) into nitrogen and water, wherein a reductant such as, for example anhydrous ammonia, aqueous ammonia or urea is added to a stream of the exhaust gas and is adsorbed onto a catalyst.

Such a pretreatment corresponds to the usual exhaust gas treatment of a personal car or a commercial vehicle.

In a subsequent second step, at least a part of the pretreated exhaust gas is processed by passing the exhaust gas through the absorption unit. In case not the entire amount of exhaust gas is processed, an unprocessed portion of the exhaust gas may be released directly into the environment.

In the absorption unit, the exhaust gas is processed by establishing a close contact between the exhaust gas and the liquid absorption medium. This close contact allows the at least one absorption component of the liquid absorption medium to bind to the CO₂ contained in the exhaust gas and to absorb the CO₂ by chemisorption or chemical reaction. This absorption may continue until the liquid absorption medium is saturated, meaning that the at least one absorption component is completely saturated with CO₂.

The absorption and in particular the chemisorption of the CO₂ gas may be improved by the use of membranes, technical meshes, a ceramic mesh and surface enhancing engineering devices. These surface enhancing means may be used to enhance the contact between the exhaust gas and the liquid absorption medium.

The absorption of CO₂ may not be complete, meaning that it is possible that the processed exhaust gas leaving the absorption unit may comprise a residual amount of CO₂. Preferably, at least 15%, more preferably at least 25% and most preferably at least 40% of the CO₂ is absorbed in the absorption unit as long as the liquid absorption medium has not saturated.

Preferably, the liquid absorption medium is renewed when a predetermined change interval is reached, a predetermined distance has been driven, a predetermined amount of fuel has been consumed and/or a predetermined level of saturation of the liquid absorption medium is detected.

The predetermined level of saturation may be set to complete (100%) saturation of the liquid absorption medium. Preferably, the predetermined level of saturation is set to less than 100%, for example, the predetermined level of saturation is 80%.

A predetermined change interval may, for example, prescribe renewal of the absorption medium at every refueling of the vehicle, after a predetermined number of refuelings of the vehicle, at every inspection of the vehicle or after a certain time has passed.

The method may comprise measurement of the condition of the liquid absorption medium in order to detect saturation. Such a measurement may, for example, be performed continuously or may be performed periodically at predetermined time intervals.

Preferably, the liquid absorption medium is renewed by replacing a cartridge comprising the liquid absorption medium or by removing saturated liquid absorption medium from a tank and subsequently filling the tank with new liquid absorption medium.

Such a cartridge may comprise a tank which receives the liquid absorption medium.

For removing saturated liquid absorption medium from a tank, such a tank may be provided with a sealable opening. If the opening is located at the bottom of the tank, the liquid absorption medium may flow out of the tank by means of gravity when the opening is opened. If the sealable opening is located on top of the tank or at another location above the maximum fill level, a pump may be used to remove the liquid. Likewise, fresh absorption medium may be filled into the tank after removal of the saturated absorption medium by means of gravity or a pump.

The step of renewing the liquid absorption medium is preferably performed at a suitable service station, such as a gas station.

Preferably, all of the exhaust gas is passed through the absorption unit and a change interval of the liquid absorption medium is selected such that a temporal average value of the CO₂ emission rate of the vehicle per driven distance is less than a predetermined limit.

For example, if the CO₂ emission of a vehicle is 150 g per km and efficiency of the CO₂ absorption is 30%, it is possible to achieve a reduction of the emission of the vehicle down to 105 g CO₂ per km. If the amount of liquid absorption medium is sufficient for a driven distance of 1000 km, the liquid absorption medium may absorb 45 kg of CO₂ until saturation. If, for example, only an average reduction of 15 % is required a change interval of the liquid absorption medium may be set to 2000 km. In this case, the average CO₂ emission of the vehicle is effectively 127.5 g per km.

Alternatively, a portion of the exhaust gas to be passed through the absorption unit is selected such that a CO₂ emission rate of the vehicle per driven distance is less than a predetermined limit.

If the absorption unit does not absorb 100 % of the CO₂ contained in the processed exhaust gas, the ratio of absorption by the absorption unit is considered for determining the amount of exhaust gas to be processed by the absorption unit.

For example, if the CO₂ emission of a vehicle is 150 g per km, a predetermined limit is set to 127.5 g per km, and the liquid absorption medium is capable for absorbing 30% of the CO₂ in the processed exhaust gas, the portion of the exhaust gas to be passed through the absorption unit is chosen to be 50% of the total amount of exhaust gas.

Preferably, the at least one absorption component is selected from an alkali hydroxide, an alkaline earth metal hydroxide, a halogenide (preferred chlorides), a pseudohalogenide, an alkali or alkaline earth oxide, an ammonia solution, an amine, an epoxide and combinations thereof.

Suitable alkali hydroxides include in particular NaOH and KOH. Suitable alkaline earth metal hydroxides include in particular Mg(OH)₂ and Ca(OH)₂. Suitable pseudohalogenides include, for example, thiocyanate Ca(SCN)₂. Suitable oxides are in particular oxides of alkali and earth alkaline metals. Suitable oxides include in particular MgO and CaO for earth alkaline and Na₂O and K₂O for alkali. Suitable halogenides include in particular CaCl₂ and MgCl₂. Suitable amines include, for example, diethanolamine (DEA), methyldiethanolamine (MDEA), diisopropanolamine (DIPA) and aminoethoxyethanol (Diglycolamine) (DGA) and Lysine. Suitable epoxides include glycidyl ethers of common diols like butanediol diglycicyl ether, of common alcohols like buntanol and pentanol or biosourced alcohols. Suitable are also alkene-oxides like pentene oxide.

Suitable amines also include poly-amines. Preferred poly-amines include, for example, polyethylene imine, polylysine or lysine-copolymers, polyivinyl amine as well as polyalkanol amines with pending primary and secondary amine functionalities.

Preferably, the carrier medium is selected from water, an alcohol, an aromatic solvent or a polar organic solvent.

Suitable polar organic solvents include in particular dimethyl sulfoxide (DMSO), sulfolane and glycols such as polyethylene glycol (PEG), oligoethylene glycols, ethylene glycol, dieethylene glycol, triethylene glycol, butylglycol, butyldiglycol and glycerol.

In case of an alkali hydroxide or ammonia as absorption component, the liquid absorption medium preferably comprises water as carrier medium.

In case an epoxide is used as absorption component, the liquid absorption medium preferably comprises an aromatic solvent and/or cyclic carbonates, as carrier medium.

In case an amine is used as absorption component, the liquid absorption medium preferably comprises water, alcohol or an aromatic solvent as carrier medium. Especially preferred water is used.

The concentration of the at least one absorption component in the carrier medium is an important parameter in the proposed process. The optimum concentration depends inter alia on the used absorption component and the chosen carrier medium. For example, in case an amine is used as absorption component and water is used as carrier medium, the following concentrations, expressed as weight percent of pure amine in the aqueous solution may be used:
Monoethanolamine: about 32 %
Diethanolamine: about 20 to 25 %
Methyldiethanolamine: about 30 to 55 %
Diglycolamine: About 50 %

Saturated absorption medium may be replaced with fresh absorption medium. The saturated absorption medium may then be regenerated in an apparatus outside of the vehicle and independently from the operation of the vehicle.

An exchange of absorption medium may, for example, be performed at a gas station when the vehicle is refueled. Such an exchange may be performed every time the vehicle is refueled or, for example, after a predetermined amount of fuel has been consumed, a predetermined distance has been driven or when the absorption medium is saturated with CO₂.

Preferably, the process further comprises regeneration of saturated liquid absorption medium outside of the vehicle by separation of the at least one saturated absorption component from the carrier medium by filtration, precipitation or distillation, thermal regeneration of the at least one saturated absorption component, wherein CO₂ released from the at least one saturated absorption component is captured, and mixing of the regenerated at least one absorption component with the recovered carrier medium.

The captured CO₂ may, for example, be used as source material, for example in a chemical process, or may be safely stored in order to permanently remove the CO₂ from the atmosphere.

In some cases, for example in case of an epoxide as absorption medium, the carbonates formed by absorption of CO₂ may be a source material suitable for the chemical industry. Thus, a preferred processes comprises preparation of fresh absorption medium outside of the vehicle wherein the at least one saturated absorption component is separated from the carrier medium by filtration, precipitation or distillation, thermal regeneration, wherein the at least one saturated absorption component is provided as source material for another chemical process, and mixing of fresh absorption component with the recovered carrier medium. In this case, no thermal regeneration is performed and fresh absorption component, for example an epoxide, is used to prepare regenerated absorption medium.

It is a further aspect of the invention to provide an absorption unit for removal of CO₂ from a vehicle exhaust gas which is suitable for installation in a vehicle. The absorption unit comprises an exhaust gas inlet which is connectable to an exhaust gas treatment system of a vehicle, at least one tank for receiving of a liquid absorption medium comprising at least one absorption component capable of absorbing CO₂, an exhaust gas outlet and means for enhancing contact between gas and liquid.

The absorption unit is configured for carrying out one of the methods described herein. Features described with respect to one of the methods also apply to the absorption unit and vice versa.

The absorption unit is preferably configured for integration into an exhaust system of a personal car or a commercial vehicle comprising an internal combustion engine. Accordingly, the exhaust gas inlet is preferably configured for connecting the absorption unit to an existing exhaust gas treating system of the vehicle. The exhaust gas outlet is preferably configured to be connected to an exhaust pipe of the vehicle.

Preferably, the at least one tank is configured to be removable, wherein the at least one tank is configured such that any liquid absorption medium received by the at least one tank is contained within the at least one tank when removed from the absorption unit. Accordingly, the at least one tank is provided with valves and/or seals so that no liquid which is received in the at least one tank is lost when fluid connections between the at least one tank and the absorption unit are disconnected. For example, quick connect couplings comprising automatic valves may be used.

Preferably, the at least one tank comprises at least one sealable opening through which fresh liquid absorption medium may be filled into the at least one tank and/or a saturated liquid absorption medium may be removed from the at least one tank without removing the at least one tank from the absorption unit.

In one embodiment, the at least one sealable opening is located at the bottom of the at least one tank. This allows the liquid absorption medium to flow out of the at least one tank by means of gravity when the opening is opened.

Additionally or alternatively, the sealable opening is located on top of the at least one tank or at another location above the maximum fill level of the at least one tank. In such a case, a tube may be inserted into the at least one tank and a pump may be used to remove the liquid.

Likewise, fresh absorption medium may be filled into the at least one tank after removal of the saturated absorption medium by means of gravity or a pump.

In one embodiment, the absorption unit comprises exactly one tank for receiving the liquid absorption medium. In another embodiment, the absorption unit comprises at least a first tank for receiving fresh liquid absorption medium and a second tank for receiving saturated liquid absorption medium.

Preferably, the means for enhancing contact between gas and liquid are arranged within the at least one tank or are connected to the at least one tank and the means for enhancing contact between gas and liquid are in fluidic connection with the exhaust gas inlet.

Preferably, the means for enhancing contact between gas and liquid are selected from means for generating gas bubbles, a venturi scrubber, a venturi nozzle, baffle plates, membranes, turbines, porous materials and combinations of two or more of said means.

The means for generating gas bubbles are preferably arranged within the at least one tank and comprise a surface having a plurality of openings which is configured to be in direct contact with the liquid received in the at least one tank. The plurality of openings is in fluidic connection with the exhaust gas inlet and when in operation, exhaust gas exits from these openings generating the gas bubbles. The openings in the surface may be provided in the form of boreholes. Alternatively, the openings may be provided in form of a porous surface. For example, a sintered material or a frit may be used.

The surface having the plurality of openings is preferably arranged at or near the bottom of the at least one tank. Further, the surface having the plurality of openings is preferably configured and arranged such that at least 90 % of the area of the bottom of the at least one tank is covered by the means for generating gas bubbles. In an especially preferred embodiment, the means for generating gas bubbles and thus the surface having the plurality of openings covers the entire bottom of the at least one tank.

Preferably one or more baffle plates are arranged within the at least one tank. The baffle plates are preferably mounted such that a stream of gas bubbles within the liquid received in the at least one tank is deflected and thus contact between gas and liquid is intensified.

Examples of suitable porous materials include ceramic, poylsulfones, epoxides, silica and aluminum oxide. The porous materials may, for example, be used as part of means for generating gas bubbles and/or may be arranged inside a tank or line through which exhaust gas and liquid absorption medium are passed in order to enhance the contact surface.

A Venturi scrubber may be used for providing an intimate contact between the exhaust gas and the liquid absorption medium. Preferably, the Venturi scrubber is connected to the at least one tank by means of a supply line and liquid absorption medium may be supplied from the at least one tank. For example, a pump may be used to supply fresh liquid absorption medium from a first tank to the Venturi scrubber. Exhaust gas and liquid absorption medium are mixed within the Venturi scrubber and a mixture of droplets and exhaust gas exits the Venturi scrubber. This mixture is guided to a gas/liquid separator and the processed exhaust gas is passed to the exhaust gas outlet. Saturated liquid absorption medium may be collected in a second tank.

Alternatively, only a single tank may be used to receive the liquid absorption medium and saturated liquid absorption medium may be fed back into this tank.

Further, the absorption unit may comprise more than one tank and more than one means for enhancing contact between gas and liquid. For example, a Venturi scrubber may be used in a first stage and then the exhaust gas may be passed to a further tank filled with liquid absorption medium and having means for generating gas bubbles.

Preferably, means for retaining of the received liquid are arranged between the at least one tank and the exhaust outlet. The means for retaining of the received liquid may, for example, be configured as a semi-permeable membrane which is arranged above the maximum liquid level in the at least one tank. The semi-permeable membrane is configured such that liquid is retained and gas, in particular nitrogen, oxygen and other atmospheric gases may flow through the membrane.

Preferably, the absorption unit further comprises a gas/liquid separator arranged upstream of the exhaust gas outlet for recovering of absorption medium which is carried along with the exhaust gas. Such a gas/liquid separator is, for example, configured as a cyclone. Recovered liquid absorption medium may be returned into the at least one tank, for example by means of a return line arranged between the gas/liquid separator and the at least one tank.

Preferably, the absorption unit further comprises a pressure regulator for regulating the pressure of the exhaust gas. Preferably, the pressure regulator is arranged at the exhaust gas inlet. In particular, by regulating the pressure of the exhaust gas a defined flow through the tank and thus through a liquid absorption medium received in the tank may be ensured.

Preferably, the absorption unit comprises a bypass line and a valve for splitting of the exhaust gas into a first portion, which is passed through the tank for absorbing CO₂ contained in the exhaust gas, and a second portion, which is passed directly to the exhaust gas outlet by means of a bypass line. This allows regulation of the amount of exhaust gas which is processed by the absorption unit. Preferably, the absorption unit comprises a control unit which regulates the amount of exhaust gas to be processed by the absorption unit so that the total CO₂ emission of the vehicle is regulated to a predetermined allowable emission rate.

Preferably, the absorption unit further comprises a sensor for measuring the degree of saturation of the liquid absorption medium. Further, the absorption unit, in particular a control unit of the absorption unit, is preferably configured to inform a driver of the vehicle about the status of the liquid absorption medium.

Preferably, the absorption unit is configured to inform a driver of the vehicle when the liquid absorption medium received in the at least one tank is saturated or the saturation is above a threshold value.

The invention is described in more detail below on the basis of the drawings, in which:
- Figure 1: shows a schematic view of a first embodiment of an absorption unit for removal of CO₂ from a vehicle exhaust gas and
- Figure 2: shows a schematic view of a second embodiment of an absorption unit.

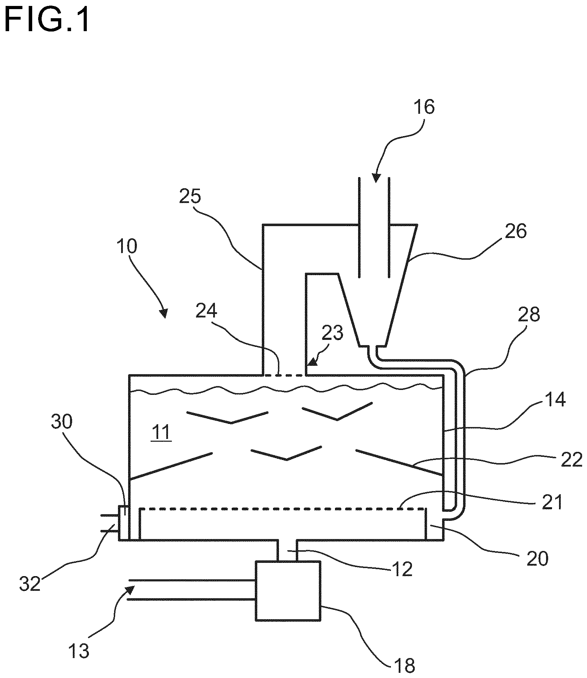

Figure 1 shows an absorption unit 10 for removal of CO₂ from a vehicle exhaust gas in a schematic view. The absorption unit 10 comprises a tank 14 in which a liquid absorption medium 11 is received. The liquid absorption medium 11 comprises at least one absorption component which is capable of absorbing CO₂ from a gas which is passed through the tank 14 by chemisorption or chemical reaction.

The absorption unit 10 further comprises an exhaust gas inlet 12 which is configured to be connected to the output of an existing exhaust gas treatment system of a vehicle by means of a connecting line 13. Exhaust gas passed through the connecting line 13 into the absorption unit 10 is first led to a pressure regulator 18 configured to reduce the pressure to a predefined value.

The exhaust gas having the predefined pressure is then passed to means for generating gas bubbles 20 which are located at the bottom of the tank 14 and comprise a plurality of openings 21. Exhaust gas will exit the means for generating gas bubbles 20 through these openings 21 and generate gas bubbles within the liquid absorption medium 11. These gas bubbles will flow upwards towards an exit 23. A membrane 24 which is arranged at the exit 23 above a liquid level of the liquid absorption medium 11 allows the flow of the exhaust gas into a connection line 25 while the liquid absorption medium 11 is retained in the tank 14.

Contact between the gas bubbles and the liquid absorption medium 11 is enhanced by multiple baffle plates 22 which are arranged in a flow path between the means for generating gas bubbles 20 and the exit 23. The baffle plates 22 force the gas bubbles to deviate from a direct flow path so that contact between the gas bubbles and the liquid absorption medium 11 is prolonged.

By passing through the liquid absorption medium 11, CO₂ contained in the exhaust gas is absorbed by the at least one absorption component of the liquid absorption medium 11.

After passing through the tank 14, the exhaust gas is led to a cyclone 26 by means of the connection line 25. In the cyclone 26, any liquid absorption medium 11 which has been carried along with the exhaust gas is separated off and returned into the tank 14 by means of a return line 28. The exhaust gas leaves the absorption unit 10 at an exhaust gas outlet 16 connected to the cyclone 26.

Absorption of CO₂ may continue until the liquid absorption medium 11 is saturated. When the liquid absorption medium 11 is saturated, the saturated liquid absorption medium 11 may be removed from the tank 14 by connecting a storage vessel for receiving the saturated absorption medium 11 to an opening 32 located near the bottom of the tank 14 and by opening a valve 30 which seals the opening 32. Likewise, the opening 32 may be used for connecting the tank 14 to a further storage vessel which provides fresh liquid absorption medium 11.

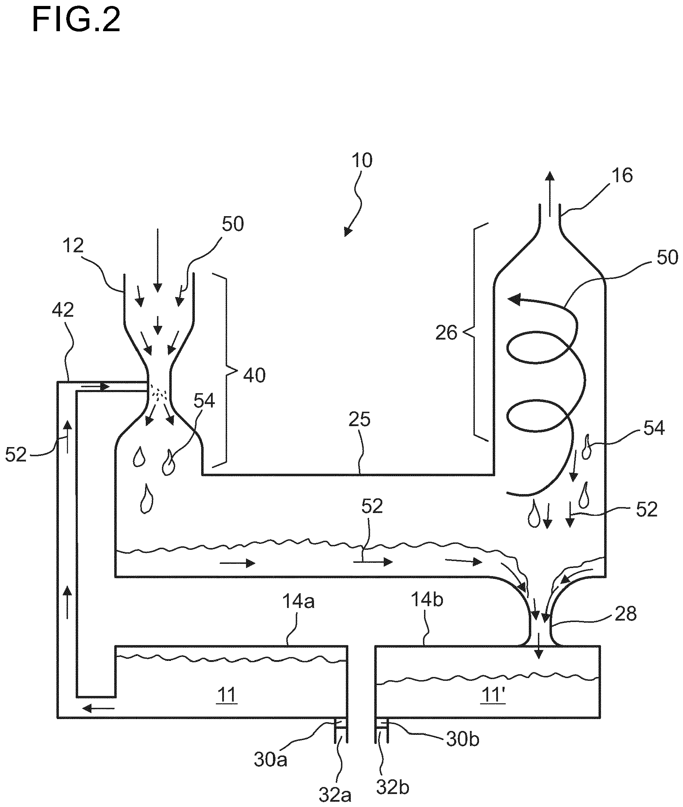

Figure 2 shows a second embodiment of an absorption unit 10. The absorption unit 10 comprises an exhaust gas inlet 12 connected to a Venturi scrubber 40.

In the Venturi scrubber 40, the exhaust gas is mixed with fresh liquid absorption medium 11 supplied from a first tank 14a by means of a supply line 42. Arrows 52 mark the flow of the liquid absorption medium 11. The liquid absorption medium 11 contacts the exhaust gas inside the Venturi scrubber 40 and exits the Venturi scrubber 40 in form of droplets 54. The droplets 54 are collected in a connection line 25 which feeds saturated liquid absorption medium 11' towards a return line 28 and then into a second tank 14b for receiving the saturated liquid absorption medium 11'.

The processed exhaust gas is passed to a cyclone 26 using the connection line 25 and saturated absorption medium 11', which is carried along with the flow 50 of the exhaust gas, is separated from the exhaust gas and also passed to the return line 28. The processed exhaust gas exits the absorption unit 10 at the exhaust gas outlet 16.

Absorption of CO₂ may continue until all of the fresh liquid absorption medium 11 is used. Fresh liquid absorption medium 11 may be provided by connecting a storage vessel comprising fresh liquid absorption medium to a first opening 32a located at the first tank 14a and opening a first valve 30 which seals the first opening 32a. Likewise, the saturated liquid absorption medium 11' may be removed from the second tank 14b by connecting a storage vessel for receiving the saturated liquid absorption medium 11' to a second opening 32b located near the bottom of the second tank 14b and by opening a second valve 30b which seals the second opening 32b.

### List of reference numerals

- 10: absorption unit
- 11: liquid absorption medium
- 11': saturated liquid absorption medium
- 12: exhaust gas inlet
- 13: connecting line
- 14: tank
- 14a: first tank
- 14b: second tank
- 16: exhaust gas outlet
- 18: pressure regulator
- 20: means for generating gas bubbles
- 21: plurality of openings
- 22: baffle plate
- 23: exit
- 24: membrane
- 25: connection line
- 26: cyclone
- 28: return line
- 30: valve
- 30a: first valve
- 30b: second valve
- 32: opening
- 32a: first opening
- 32b: second opening

- 40: Venturi scrubber
- 42: supply line

- 50: gas flow
- 52: flow of liquid absorption medium
- 54: droplets

## Claims

1. Process for removal of carbon dioxide (CO₂) from a vehicle exhaust gas wherein, within a vehicle, a vehicle exhaust gas is pretreated in order to remove nitrogen oxides (NOₓ), carbon monoxide (CO), carbon hydrates and/or particles and, after pretreatment, CO₂ is at least partially absorbed from the exhaust gas by passing at least a portion of the exhaust gas through an absorption unit (10), wherein the absorption unit (10) comprises a liquid absorption medium (11) which comprises at least one absorption component capable of absorbing CO₂ by chemisorption or chemical reaction which is dissolved, dispersed or suspended in a carrier medium.

2. The process of claim 1, **characterized in that** the liquid absorption medium (11) is renewed when a change interval is reached, a predetermined distance has been driven, a predetermined amount of fuel has been consumed and/or saturation of the liquid absorption medium (11) is detected.

3. The process of claim 1 or 2, **characterized in that** saturated liquid absorption medium (11) is renewed by replacing a cartridge comprising the liquid absorption medium (11) or by removing saturated liquid absorption medium (11) from a tank (14) and subsequently filling the tank with fresh liquid absorption medium (11).

4. The process of any one of claims 1 to 3, **characterized in that** all of the exhaust gas is passed through the absorption unit (10) and a change interval of the liquid absorption medium (11) is selected such that a temporal average value of the CO₂ emission rate of the vehicle per driven distance is less than a predetermined limit.

5. The process of any one of claims 1 to 3, **characterized in that** the portion of the exhaust gas to be passed through the absorption unit (10) is selected such that a CO₂ emission rate of the vehicle per driven distance is less than a predetermined limit.

6. The process of any one of claims 1 to 5, **characterized in that** the at least one absorption component is selected from an alkali hydroxide, an alkaline earth hydroxide, an alkali or alkaline earth oxide, an alkaline earth halogenide, an alkaline earth pseudohalogenide, an ammonia solution, an amine, an epoxide and combinations thereof.

7. The process of any one of claims 1 to 6, **characterized in that** the carrier medium is selected from water, an alcohol, an aromatic solvent, a cyclic carbonate and a polar organic solvent.

8. The process of any one of claims 1 to 7, **characterized in that** saturated liquid absorption medium (11) is regenerated outside of the vehicle by separation of the at least one absorption component from the carrier medium by filtration, precipitation or distillation, thermal regeneration of the at least one absorption component, wherein CO₂ released from the at least one absorption component is captured, and mixing of the regenerated at least one absorption component with the carrier medium.

9. Absorption unit (10) for removal of CO₂ from a vehicle exhaust gas comprising an exhaust gas inlet (12) which is connectable to an exhaust gas treatment system of a vehicle, at least one tank (14) for receiving of a liquid absorption medium (11) comprising at least one absorption component capable of absorbing CO₂, an exhaust gas outlet (16) and means for enhancing contact between gas and liquid, the absorption unit (10) being configured for carrying out the method according to any one of claims 1 to 7.

10. The absorption unit (10) of claim 9, **characterized in that** the tank (14) is configured to be removable, wherein the at least one tank (14) is configured such that any liquid absorption medium (11) received by the at least one tank (14) is contained within the at least one tank (14) when removed from the absorption unit (10).

11. The absorption unit (10) of claim 9, **characterized in that** the at least one tank (14) comprises at least one sealable opening (32) through which a liquid absorption medium (11) may be filled into the at least one tank (14) and/or a saturated liquid absorption medium (11) may be removed from the at least one tank (14) without removing the at least one tank (14) from the absorption unit (10).

12. The absorption unit (10) of any one of claims 9 to 11, **characterized in that** the means for enhancing contact between gas and liquid are arranged within the at least one tank (14) or are connected to the at least one tank (14) and the means for enhancing contact between gas and liquid are in fluidic connection with to the exhaust gas inlet (12).

13. The absorption unit (10) of claim 12, **characterized in that** the means for enhancing contact between gas and liquid are selected from means for generating gas bubbles (20), a venturi scrubber, a venturi nozzle, baffle plates (22), turbines, membranes, porous materials and combinations of two or more of said means.

14. The absorption unit (10) of any one of claims 9 to 13, **characterized in that** it further comprises a gas/liquid separator arranged upstream of the exhaust gas outlet (16) for recovering of absorption medium (11) which is carried along with the exhaust gas.

15. The absorption unit (10) of any one of claims 9 to 14, **characterized in that** it further comprises a pressure regulator (18) for regulating the pressure of the exhaust gas.
